(19) Europäisches Patentamt
European Patent Office
Office européen des brevets

(11)  EP 2 759 847 B1

(12)  **EUROPEAN PATENT SPECIFICATION**

(45) Date of publication and mention
of the grant of the patent:
**06.01.2016  Bulletin 2016/01**

(51) Int Cl.:
***G01S 13/90*** *(2006.01)*

(21) Application number: **14169504.9**

(22) Date of filing: **22.05.2014**

(54)  **Method and apparatus for determining equivalent velocity**

Verfahren und Vorrichtung zur Bestimmung der äquivalenten Geschwindigkeit

Procédé et dispositif pour déterminer la vitesse équivalent

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2014  CN 201410008738**

(43) Date of publication of application:
**30.07.2014  Bulletin 2014/31**

(73) Proprietor: **Institute of Electronics, Chinese Academy of Sciences**
**Beijing 100190 (CN)**

(72) Inventors:
 • **Deng, Yunkai**
  **100190 Beijing (CN)**
 • **Zhao, Shuo**
  **100190 Beijing (CN)**
 • **Wang, Yu**
  **100190 Beijing (CN)**
 • **Zhang, Zhimin**
  **100190 Beijing (CN)**
 • **Zhao, Fengjun**
  **100190 Beijing (CN)**
 • **Wang, Chunle**
  **100190 Beijing (CN)**
 • **Liu, Yue**
  **100190 Beijing (CN)**
 • **Liu, Yabo**
  **100190 Beijing (CN)**

(74) Representative: **Gulde & Partner**
**Patent- und Rechtsanwaltskanzlei mbB**
**Wallstraße 58/59**
**10179 Berlin (DE)**

(56) References cited:
**CN-B- 102 288 964**

 • **MONTIGUARNIERI A: "Adaptive Removal of Azimuth Ambiguities in SAR Images", IEEE TRANSACTIONS ON GEOSCIENCE AND REMOTE SENSING, IEEE SERVICE CENTER, PISCATAWAY, NJ, US, vol. 43, no. 3, 1 March 2005 (2005-03-01), pages 625-633, XP011127143, ISSN: 0196-2892, DOI: 10.1109/TGRS.2004.842476**
 • **NERONSKIY L B ET AL: "Phase and amplitude histories model adapted to the spaceborne SAR survey - Advances in synthetic aperture radar", IEE PROCEEDINGS: RADAR, SONAR & NAVIGATION, INSTITUTION OF ELECTRICAL ENGINEERS, GB, vol. 150, no. 3, 2 June 2003 (2003-06-02), pages 184-192, XP006020585, ISSN: 1350-2395, DOI: 10.1049/IP-RSN:20030443**

EP 2 759 847 B1

## Description

### TECHNICAL FIELD

The present disclosure relates to a data processing technology, and particularly to a method and apparatus for determining an equivalent velocity for Synthetic Aperture Radar (SAR) imaging.

### BACKGROUND

An equivalent velocity of a satellite is one of the key parameters for high resolution spaceborne Synthetic Aperture Radar (SAR) imaging. The precision of the equivalent velocity directly affects the focusing effect of the spaceborne SAR. Generally, an existing method for determining an equivalent velocity is implemented by determining the chirp rate of an echo signal in azimuth. Such a method acquires many times of iteration, thus resulting in low efficiency and failing to fully utilize auxiliary information of radar data, such as the satellite positions, the beam direction, and so on.

Andrea Montiguarnieri: "Adaptive removal of azimuth ambiguities in SAR images" (IEEE Transactions on Geoscience and Remote Sensing, Vol. 43, no. 3, 1 March 2005, pages 625-633) introduces an innovative algorithm that is capable of suppression of strong azimuth ambiguities in single-look complex (SLC) synthetic aperture radar images, to be used both for detected products and for interferometric surveys. The algorithm exploits a band-pass filter to select that portion of the azimuth spectrum that is less influenced by aliasing, the one that corresponds to the s in the replicated azimuth antenna pattern. The selectivity of this filter adapts locally depending on the estimated ambiguity intensity: the filter is more selective in the presence of strong ambiguities and becomes all-pass in absence of ambiguities. The design of such filter frames in the Wiener approach with two different normalization options, depending on the use of the SLC image, either for getting multilook averaged detected products or for interferometric applications. Preliminary results achieved by processing ENVISAT Advanced Synthetic Aperture Radar sensor data are provided.

L. B. Neronskiy et al.: "Phase and amplitude histories model adapted to the spaceborne SAR survey - Advances in synthetic apereature radar" (IEE Proceedings: Radar, Sonar and Navigation, Vol. 150, no. 3, 2 June 2003, pages 184-192) proposes a model of relative movement of a SAR platform and imaged footprint is proposed. The model has been specially adapted to conditions of a spaceborne SAR survey. The main difference of this model from that used before is that it takes into account the SAR platform movement and Earth rotation in addition to commonly used calculations of satellite motion in the disturbed Earth gravitation field. It is shown that SAR motion could be considered as linear, but with velocity derived from orbital motion parameters. The proposed model could be easily applied to analysis of SAR processing algorithms and the influence of the orbit parameter estimation errors on the resulting image quality. Use of the model simplifies the parameter estimation of the SAR sensors intended for planetary investigations.

### SUMMARY

The present disclosure provides a method and apparatus for determining an equivalent velocity so that an equivalent velocity of high resolution spaceborne SAR imaging can be determined according to position information and beam direction information of a satellite.

The present disclosure is implemented in the following way:

a method for determining an equivalent velocity of a satellite for SAR imaging, wherein the method includes:

establishing a geocentric rotation coordinate system, and acquiring, according to a running track of a satellite, a plane closest to the running track of the satellite under the geocentric rotation coordinate system so that a quadratic sum of distances from respective points on the running track of the satellite to the plane is minimum;

establishing a circular arc track model in the plane and acquiring a circular arc track closest to the running track of the satellite in the circular arc track model;

determine, according to the information of the circular arc track, an equivalent velocity of the satellite for SAR imaging,

wherein the step of determining, according to information of the circular arc track, an equivalent velocity of SAR imaging of the satellite includes:

set related parameters, the related parameters include: a point target on an earth surface track, set as T; a point S, set as the middle point of the circular arc track; the circle center C of the circular arc track, set as the origin of a coordinate system; then the coordinates of the point target T satisfy the following expression:

$$\vec{T} = \left[ 0, R_c \cos \beta_e, R_c \sin \beta_e \right]^T ;$$

where $R_c$ is the distance from the origin of the coordinate system to the point target T; $\beta_e$ is $\angle SCT$ ;

During the data acquisition time, the coordinates of the position S' of the satellite satisfy the following expression:

$$\vec{S}' = \left[ r \sin\left( \omega_s \tau \right), r \cos\left( \omega_s \tau \right), 0 \right]^T ;$$

where $\omega_s$ is the angular velocity of the satellite on the circular arc track; $\tau$ is the azimuth time; $r$ is the radius of the circular arc track;

then an instantaneous slant range satisfies the following expression:

$$R(\tau) = \left| \overline{ST} \right|$$
$$= \sqrt{\left[ r \sin\left( \omega_s \tau \right) \right]^2 + \left[ r \cos\left( \omega_s \tau \right) - R_c \cos \beta_e \right]^2 + \left[ R_c \sin \beta_e \right]^2}$$
$$= \sqrt{r^2 - 2rR_c \cos\left( \omega_s \tau \right) \cos \beta_e + R_c^2} ;$$

according to a method of small angle approximation, the expression for the instantaneous slant range is simplified into the following expression:

$$R(\tau) = \sqrt{r^2 + R_c^2 - 2rR_c \cos \beta_e + rR_c \left( \omega_s \tau \right)^2 \cos \beta_e} = \sqrt{r_0^2 + v_r^2 \tau^2} ;$$

where $r_0$ is the shortest slant range, $v_r$ is the equivalent velocity which satisfies the following expression:

$$v_r = \sqrt{rR_c \omega_s^2 \cos \beta_e} ..$$

In the solution, the step of establishing the geocentric rotation coordinate system, and acquiring, according to the running track of the satellite the plane closest to the running track of the satellite under the geocentric rotation coordinate system so that a quadratic sum of distances from respective points on the running track of the satellite to the plane is minimum includes:

establishing the geocentric rotation coordinate system and convert satellite position coordinates into coordinates under the geocentric rotation coordinate system;
acquiring the plane closest to the running track of the satellite, and the plane satisfies the following expression:

$$n_1 x + n_2 y + n_3 z = c ;$$

where $\vec{n} = [n_1, n_2, n_3]^T$ is a unit normal vector of the plane and c is a constant;
acquiring the unit normal vector $\vec{n} = [n_1, n_2, n_3]^T$ and the constant c when a quadratic sum of distances from respective points on the running track of the satellite to the plane is minimum, so as to acquire the plane closest to the running track of the satellite.

In the solution, the step of establishing the circular arc track model in the plane and acquiring the circular arc track closest to the running track of the satellite in the circular arc track model includes:

projecting a position vector of the satellite in the geocentric rotation coordinate system to the plane closest to the running track of the satellite to acquire a projection curve;

establishing the circular arc track model, and acquiring a circular arc track closest to the projection curve in the circular arc track model, the circular arc track satisfies the following expression:

$$x^2 + y^2 + ax + by + d = 0 \ ;$$

acquiring related parameters of the circular arc track: a, b and d when a quadratic sum of distances from respective points on the projection curve to the circular arc track is minimum, so as to acquire the circular arc track closest to the projection curve.

The present disclosure further provides an apparatus for determining an equivalent velocity of a satellite for SAR imaging, wherein the apparatus includes: a model establishing unit, an acquiring unit and a determining unit, wherein the model establishing unit is configured to establish a geocentric rotation coordinate system, and further configured to establish a circular arc track model in the geocentric rotation coordinate system;

the acquiring unit is configured to acquire, according to a running track of a satellite under the geocentric rotation coordinate system, a plane closest to the running track of the satellite so that a quadratic sum of distances from respective points on the running track of the satellite to the plane is minimum; and further configured to acquire a circular arc track closest to the running track of the satellite in the circular arc track model, and send information of the circular arc track to the determining unit;

the determining unit is configured to determine, according to the information of the circular arc track, an equivalent velocity of SAR imaging of the satellite,

wherein the determining unit is configured to set related parameters, wherein the related parameters include: a point target on an earth surface track, set as T; a point S, set as the middle point of the circular arc track; the circle center C of the circular arc track, set as the origin of a coordinate system; then the coordinates of the point target T satisfy the following expression:

$$\vec{T} = \left[ 0, R_c \cos \beta_e, R_c \sin \beta_e \right]^T \ ;$$

where $R_c$ is the distance from the origin of the coordinate system to the point target T; $\beta_e$ is $\angle SCT$ ;

During the data acquisition time, the coordinates of the position $S'$ of the satellite satisfy the following expression:

$$\vec{S}' = \left[ r \sin \left( \omega_s \tau \right), r \cos \left( \omega_s \tau \right), 0 \right]^T \ ;$$

where $\omega_s$ is the angular velocity of the satellite on the circular arc track; $\tau$ is the azimuth time; $r$ is the radius of the circular arc track;

then an instantaneous slant range satisfies the following expression:

$$R(\tau) = \left| \overline{S'T} \right|$$
$$= \sqrt{\left[ r \sin \left( \omega_s \tau \right) \right]^2 + \left[ r \cos \left( \omega_s \tau \right) - R_c \cos \beta_e \right]^2 + \left[ R_c \sin \beta_e \right]^2}$$
$$= \sqrt{r^2 - 2rR_c \cos \left( \omega_s \tau \right) \cos \beta_e + R_c^2} \ ;$$

according to a method of small angle approximation, the expression for the instantaneous slant range is simplified into the following expression:

$$R(\tau) = \sqrt{r^2 + R_c^2 - 2rR_c \cos\beta_e + rR_c \left(\omega_s\tau\right)^2 \cos\beta_e} = \sqrt{r_0^2 + v_r^2\tau^2} \; ;$$

where $r_0$ is the shortest slant range, $v_r$ is the equivalent velocity which satisfies the following expression:

$$v_r = \sqrt{rR_c \omega_s^2 \cos\beta_e} \; .$$

In the solution, the acquiring unit is specifically configured to convert, in the geocentric rotation coordinate system, satellite position coordinates into coordinates under the geocentric rotation coordinate system and acquire the plane closest to the running track of the satellite; the plane satisfies the following expression:

$$n_1 x + n_2 y + n_3 z = c \; ;$$

where $\vec{n} = [n_1, n_2, n_3]^T$ is a unit normal vector of the plane and c is a constant;

acquire the unit normal vector $\vec{n} = [n_1, n_2, n_3]^T$ and the constant c when a quadratic sum of distances from respective points on the running track of the satellite to the plane is minimum, so as to acquire the plane closest to the running track of the satellite.

In the solution, the acquiring unit is configured to project a position vector of the satellite in the geocentric rotation coordinate system in the plane closest to the running track of the satellite to acquire a projection curve; in the circular arc track model, acquire a circular arc track close to the projection curve; the circular arc track satisfies the following expression:

$$x^2 + y^2 + ax + by + d = 0 \; ;$$

acquire related parameters of the circular arc track: a, b and d when a quadratic sum of distances from respective points on the projection curve to the circular arc track is minimum, so as to acquire the circular arc track closest to the projection curve.

The method and apparatus for determining an equivalent velocity in the embodiments of the present disclosure include: establishing a geocentric rotation coordinate system; under the geocentric rotation coordinate system, acquiring according to a running track of a satellite a plane closest to the running track of the satellite; establishing a circular arc track model in the plane and acquiring a circular arc track closest to the running track of the satellite in the circular arc track model; determining, according the circular arc track and beam direction information of the satellite, an equivalent velocity of SAR imaging of the satellite. In this way, an equivalent velocity of high resolution spaceborne SAR imaging can be determined according to position information and beam direction information of a satellite. In addition, the method for determining an equivalent velocity of the embodiments of the present disclosure avoids many times of iteration, and thereby improving the efficiency for determining the equivalent velocity.

## BRIEF DESCRIPTION OF THE DRAWINGS

Fig. 1 is a flowchart of a method for determining the equivalent velocity according to an embodiment of the present disclosure;

Fig. 2 is a schematic diagram illustrating a geometric model of a spaceborne SAR according to an embodiment of the present disclosure;

Fig. 3 is a schematic diagram illustrating a geometric model of a spaceborne SAR in a circular arc track according to an embodiment of the present disclosure;

Fig. 4 is a schematic diagram illustrating a slant range error simulation result of an equivalent squint mode! determined by first-order and second-order Doppler parameters according to an embodiment of the present disclosure;

Fig. 5 is a schematic diagram illustrating a slant range error simulation result of fitting an equivalent velocity through a double-curve slant range model according to an embodiment of the present disclosure; and

Fig. 6 is a structural diagram of an apparatus for determining an equivalent velocity according to an embodiment of the present disclosure.

## DETAILED DESCRIPTION

The present disclosure will be further described in details below in combination with the accompanying drawings and specific embodiments.

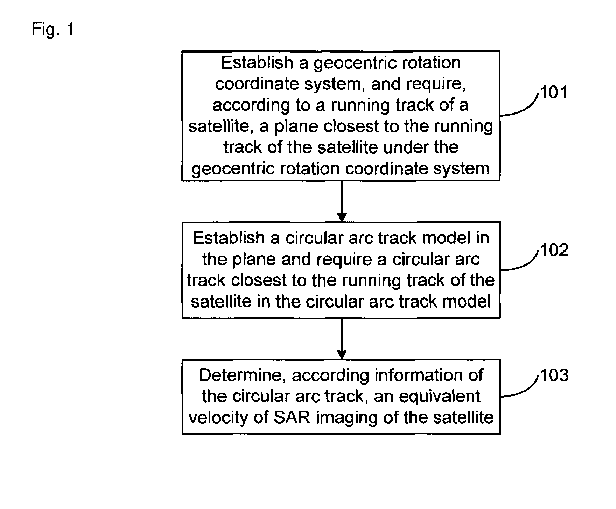

Fig. 1 is a flowchart of a method for determining the equivalent velocity of an embodiment of the present disclosure, including the following steps as shown in Fig. 1:

Step 101: establish a geocentric rotation coordinate system, acquire according to a running track of a satellite a plane closest to the running track of the satellite under the geocentric rotation coordinate system;

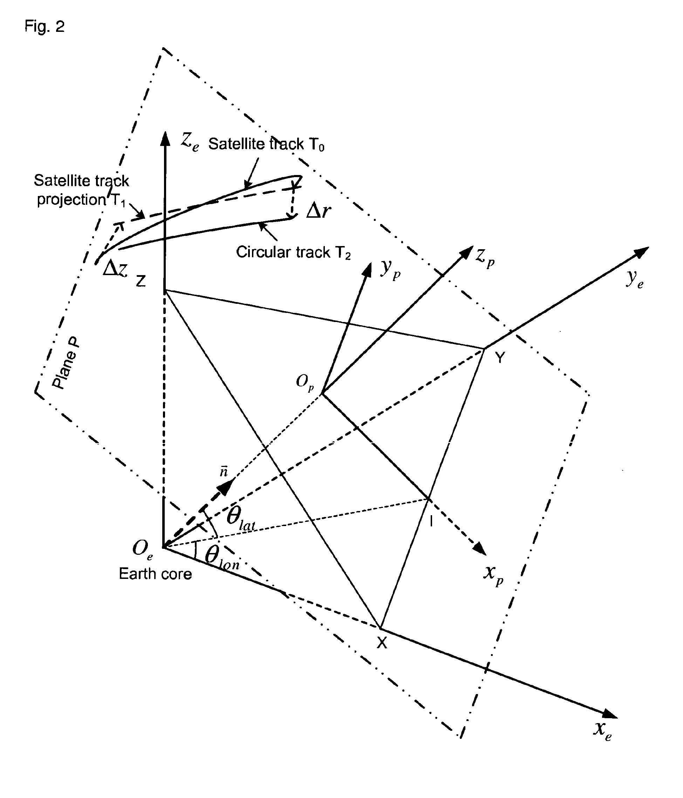

specifically, Fig. 2 is a schematic diagram illustrating a geometric model of a spaceborne SAR in an embodiment of the present disclosure. As shown in Fig. 2, the geocentric rotation coordinate system $O_e x_e y_e z_e$ is established, where $O_e$ is the earth core; the $z_e$ axis points to the direction of angular momentum of earth rotation; the $x_e$ axis points to a certain fixed longitude of the earth; the $x_e$ axis, the $y_e$ axis and the $z_e$ axis constitute a right hand orthogonal system; it is assumed that the satellite track in the coordinate system $O_e x_e y_e z_e$ is indicated by Curve $T_0$ in Fig. 2 and that Plane P is a plane closest to Curve $T_0$, i.e. a quadratic sum of distances from respective points on Curve $T_0$ to Plane P is minimum. Such a scenario is the plane closest to Curve $T_0$ in the sense that a mean square error is minimum, then Plane P may be expressed as:

$$n_1 x + n_2 y + n_3 z = c \quad (1)$$

where $\vec{n} = [n_1, n_2, n_3]^T$ is a unit normal vector of Plane P, and c is a constant; without losing generality, it is provided that $n_3 \neq 0$, the two sides of Formula (1) are divided by $n_3$ to acquire Formula (2) after transposition and arrangement:

$$n_1' x + n_2' y + c' = z \quad (2)$$

where $n_1'$, $n_2'$ and c' satisfy Formula (3):

$$n_1' = -\frac{n_1}{n_3}; \quad n_2' = -\frac{n_2}{n_3}; \quad c' = \frac{c}{n_3} \quad (3)$$

when the coordinates of a position vector of the satellite at Moment N is $\vec{P}_i = [x_i, y_i, z_i]^T$, where $1 \leq i \leq N$ and N is a natural number; substituting the coordinates of the position vector into Formula (2), a system of linear equations may be obtained as follows:

$$A \cdot s = b \quad (4)$$

where A is a coefficient matrix, s is a variable vector, b is a constant vector, and A, s and b respectively satisfy Formula (5) to Formula (7):

$$A = \begin{bmatrix} x_1 & y_1 & 1 \\ \dots & \dots & \dots \\ x_N & y_N & 1 \end{bmatrix} \quad (5)$$

$$s = \begin{bmatrix} n'_1 \\ n'_2 \\ c' \end{bmatrix} \quad (6)$$

$$b = \begin{bmatrix} z_1 \\ \dots \\ z_N \end{bmatrix} \quad (7)$$

when N>3, through the least square method, Formula (4) may be solved as follows:

$$s = \left(A^T A\right)^{-1} A^T b \quad (8)$$

through Formula (3), the normal vector $\vec{n}$ and the constant c of Plane P may be obtained;

Investigating the algebraic significance of the least square method: it is assumed that an over-determined (i.e. the number of independent equations is larger than the number of variables) linear system is $Ax=b$, where $A$ is a coefficient matrix of the linear system, $x$ is a to-be-solved variable vector and $b$ is a constant vector. In order to acquire x such that the sum of the squares of errors of the linear equations in the system is minimum, e.g. $\|Ax\text{-}b\|_2$ is minimum, where $\|g\|_2$ represents the 2-norm of a vector, then A, x and b satisfy the following expression:

$$f(x) = (Ax - b)^T (Ax - b) = x^T A^T A x - 2x^T A^T b + b^T b \quad (9)$$

the gradient of Formula (9) is:

$$\nabla f(x) = 2A^T A x - 2A^T b \quad (10)$$

a matrix formed by the second-order partial derivatives of Formula (10) is:

$$\left(\frac{\partial^2 f}{\partial x_i \partial x_j}\right) = 2A^T A \quad (11)$$

where $x_i$ and $x_j$ are elements in Vector x, thus it is learned that the matrix of the second-order partial derivatives of $f(x)$ is a symmetric positive definite matrix; therefore, the minimum value of $f(x)$ is obtained where the gradient thereof is zero and Vector x satisfies the following expression:

$$x = \left(A^T A\right)^{-1} A^T b \quad (12)$$

thus it can be learned from the algebraic significance of the least square method that Plane P is determined to be the plane closest to the satellite track $T_0$ in the sense that the mean square error is minimum;

Step 102: establish a circular arc track model in the plane and acquire a circular arc track closest to the running track of the satellite in the circular arc track model;

specifically, as shown by the geometric model of the spaceborne SAR in Fig. 2, the satellite track curve $T_0$ needs to be

projected on Plane P; the projection of the satellite track curve $T_0$ on Plane P is as shown by $T_1$ in Fig. 2; a coordinate system $O_p x_p y_p z_p$ is established, where the origin $O_p$ of coordinates is the projection of the earth core $O_e$ on Plane P; the $z_p$ axis is in the same direction with the normal vector $\vec{n}$ of Plane P; to facilitate calculation, the $x_p$ is set to be vertical to an intersection $XY$ of Plane P and Plane $O_e$ - $x_e y_e$ ; and the axis $x_p$, the axis $y_p$ and the axis $z_p$ form a right hand orthogonal system; the angle of latitude and the angle of longitude of the unit normal vector $\vec{n}$ in the coordinate system $O_p x_p y_p z_p$ are assumed as $\theta_{lat}$ and $\theta_{lon}$, respectively;

the following three operations are required to obtain the coordinates of all points on the projection $T_1$ of the satellite track on the Plane P under the coordinate system $O_p x_p y_p z_p$ :

Step 1: projection, project a position vector $\vec{P_i}$ of each point of the satellite track curve $T_0$ along the unit vector $\vec{n}$;

Step 2: translation, subtract a constant offset $\overline{O_e O_p}$ from the obtained position vector, i.e. subtract $c\vec{n}$;

Step 3: rotation, rotate an angle of $\theta_{lon}$ anticlockwise around the $z_p$ axis and rotate an angle of $\dfrac{\pi}{2} - \theta_{lat}$ anticlockwise around the $y_p$ axis;

the position vector of each point on the satellite track projection $T_1$ under the coordinate system $O_p x_p y_p z_p$ is obtained as follows:

$$\vec{P_i'} = \left[ x_i', y_i', z_i' \right]^T \quad (13)$$

where $z_i' = 0$.

Provided that a circular arc closest to the satellite track projection $T_1$ in the sense that the mean square error is minimum on Plane P is indicated by the circular arc track $T_2$ in Fig. 2, the circular arc track $T_2$ may be expressed as:

$$x^2 + y^2 + ax + by + d = 0 \quad (14)$$

where $a$ and $b$ are parameters related to the center of the circular arc, and d is a parameter related to the radius of the circular arc; provided that the coordinates of the center of the circular arc are $(x_c, y_c)$ and the radius is $r_c$, then:

$$x_c = -\frac{a}{2}, \quad y_c = -\frac{b}{2}, \quad r_c = \sqrt{\frac{a^2}{4} + \frac{b^2}{4} - d} \quad (15)$$

Substituting Formula (13) into Formula (14), a system of linear equations may be obtained as follows:

$$A' \cdot s' = b' \quad (16)$$

where $A'$ is a coefficient matrix, $s'$ is a variable vector, $b'$ is a constant vector, and $A'$, $s'$ and $b'$ respectively satisfy Formula (17) to Formula (19):

$$A' = \begin{bmatrix} x_1' & y_1' & 1 \\ \dots & \dots & \dots \\ x_N' & y_N' & 1 \end{bmatrix} \quad (17)$$

$$s' = \begin{bmatrix} a \\ b \\ d \end{bmatrix} \quad (18)$$

$$b' = \begin{bmatrix} -x_1'^2 - y_1'^2 \\ ... \\ -x_N'^2 - y_N'^2 \end{bmatrix} \quad (19)$$

when n>3, Formula (20) may be obtained from Formula (16) through the least square method:

$$s' = \left( A'^T A' \right)^{-1} A'^T b' \quad (20)$$

So far, an algebraic equation of the circular arc track $T_2$ has been established; it can be learned from the algebraic significance of the least square method that the circular arc track $T_2$ is determined to be the circular arc closest to the satellite track projection $T_1$ in the sense that the mean square error is minimum; here, a method for determining that the circular arc track $T_2$ is the circular arc closest to the satellite track projection $T_1$ in the sense that the mean square error is minimum is the same as the method for determining that Plane P is the plane closest to the satellite track $T_0$ in the sense that the mean square error is minimum in Step 101 and will not be repeated here;

Step 103: determine, according to the information of the circular arc track, an equivalent velocity of SAR imaging of the satellite;

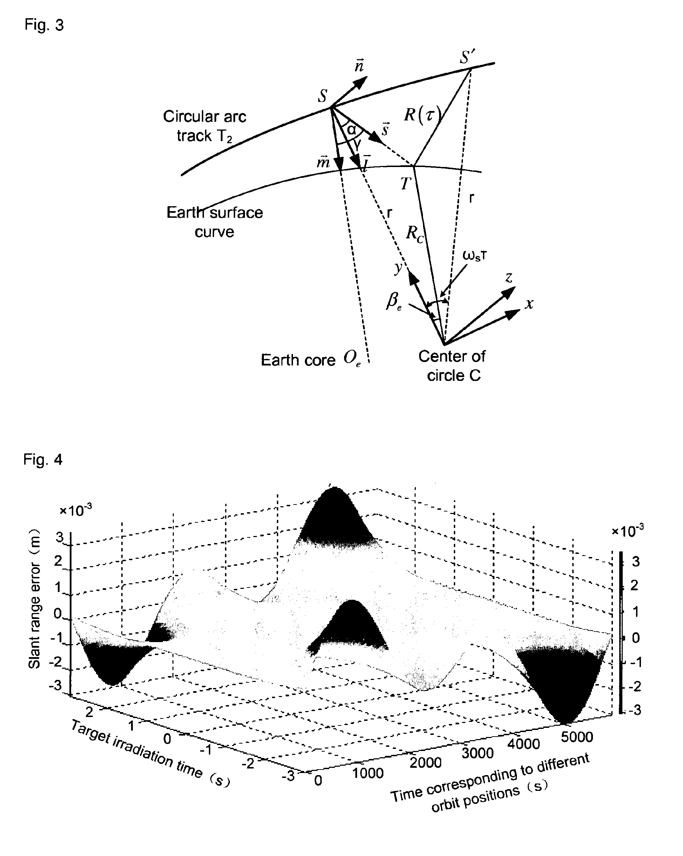

specifically, Fig. 3 is a schematic diagram illustrating a geometric model of a spaceborne SAR in a circular arc track according to an embodiment of the present disclosure. As shown in Fig. 3, to facilitate calculation, a new coordinate system is established as follows: the origin of the coordinate system is the center $C$ of the circular arc track; the $z$ axis in the same direction as that of the normal vector $\vec{n}$ of Plane P; the $y$ axis is in the same direction as that of $\overrightarrow{CS}$; in Fig. 3, the middle point $S$ is the middle point of the circular arc track $T_2$; the $x$ axis, the $y$ axis and the $z$ axis form a right hand orthogonal system; in Fig. 3, $\vec{l}$ is a unit vector from the satellite to the circle center, $\vec{m}$ is a unit vector from the satellite to the earth core and $\vec{s}$ is a unit vector of a beam sight; related parameters are set as follows: a point target on a track on the surface of the earth is set as $T$; the azimuth time is set as $\tau$; the radius of the circular arc $T_2$ is represented by $r$; the CT length is represented by $R_c$; $\angle SCT$ is indicated by $\beta_e$; the angular velocity of the satellite on the circular arc track $T_2$ is indicated by $\omega_s$, then the coordinates of the point target T may be expressed as:

$$\vec{T} = \left[ 0, R_c \cos \beta_e, R_c \sin \beta_e \right]^T \quad (21)$$

During the data acquisition time, the coordinates of the position $S'$ of the satellite may be expressed as follows:

$$\vec{S}' = \left[ r \sin(\omega_s \tau), r \cos(\omega_s \tau), 0 \right]^T \quad (22)$$

Therefore, an instantaneous slant range may be expressed as:

$$R(\tau) = \left| \overrightarrow{S'T} \right|$$

$$= \sqrt{\left[ r \sin(\omega_s \tau) \right]^2 + \left[ r \cos(\omega_s \tau) - R_c \cos \beta_e \right]^2 + \left[ R_c \sin \beta_e \right]^2}$$

$$= \sqrt{r^2 - 2rR_c \cos(\omega_s \tau) \cos \beta_e + R_c^2}$$

$$(23)$$

applying small angle approximation, Formula (23) may be simplified into:

$$R(\tau) = \sqrt{r^2 + R_c^2 - 2rR_c \cos \beta_e + rR_c (\omega_s \tau)^2 \cos \beta_e} = \sqrt{r_0^2 + v_r^2 \tau^2} \qquad (24)$$

where $r_0$ is the shortest slant range, $v_r$ is the equivalent velocity; in addition, $r_0$ and $v_r$ respectively satisfy Formula (25) and Formula (26):

$$r_0 = \sqrt{r^2 + R_c^2 - 2rR_c \cos \beta_e} \qquad (25)$$

$$v_r = \sqrt{rR_c \omega_s^2 \cos \beta_e} \qquad (26)$$

So far, an equivalent velocity $v_r$ acquired for spaceborne SAR imaging has been determined by Formula (26).

The effect of the present disclosure will be further illustrated below in combination with specific embodiments.

Parameters of a typical low-orbit solar synchronous orbit are taken for example below. The slant range history of a radar relative to an irradiation point of the center of a beam in an orbit period is fitted by using the determined equivalent velocity $v_r$ and a double-curve slant range model. A fitting error is compared with an error of an existing equivalent squint model deduced from first-order and second-order Doppler parameters, and the two has similar precision, thus verifying the effectiveness of the method of the embodiments of the present disclosure.

Table 1 illustrates parameters of an orbit and parameters of a radar system. This is a group of parameters of a typical low-orbit solar synchronous orbit. Such an orbit is also an orbit adopted by an existing SAR system.

Table 1

| Orbit altitude | 700km | Eccentricity | 0.0011 |
|---|---|---|---|
| Orbit inclination | 97.42° | Argument of perigee | 90° |
| Downwards angle of visibility | 30° | | |

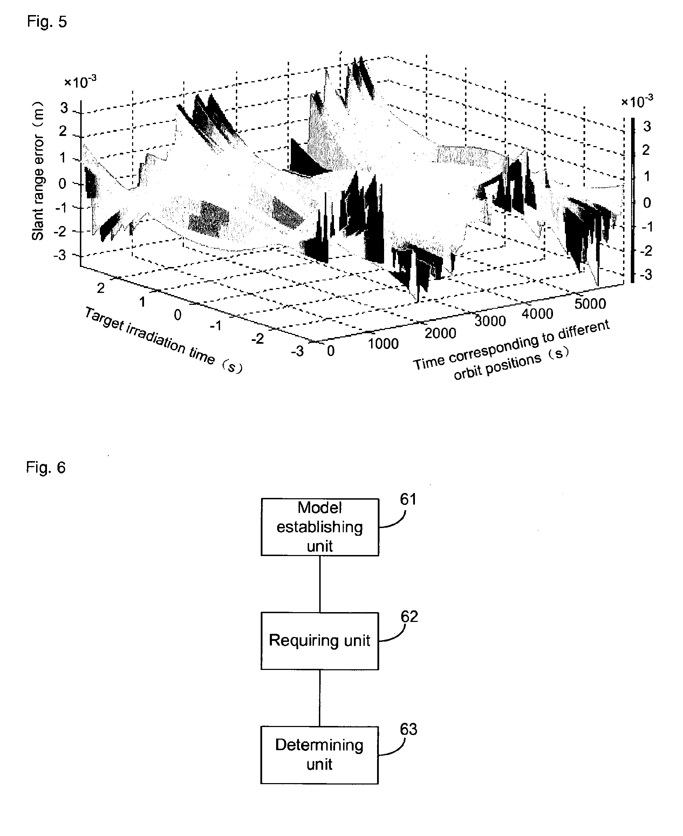

Fig. 4 is a schematic diagram illustrating a slant range error simulation result of an equivalent squint model determined by first-order and second-order Doppler parameters in an embodiment of the present disclosure, and Fig. 5 is a schematic diagram illustrating a slant range error simulation result of fitting an equivalent velocity through a double-curve slant range model according to an embodiment of the present disclosure. As shown in Fig. 4 and Fig. 5, the two has a similar error precision, thus verifying the effectiveness of the method for determining an equivalent velocity according to the embodiments of the present disclosure.

Based on the method above, Fig. 6 is a structural diagram of an apparatus for determining an equivalent velocity of an embodiment of the present disclosure. As shown in Fig. 6, the apparatus includes: a model establishing unit 61, an acquiring unit 62 and a determining unit 63, wherein

the model establishing unit 61 is configured to establish a geocentric rotation coordinate system; and is further configured to establish a circular arc track model in the geocentric rotation coordinate system;

the acquiring unit 62 is configured to acquire, according to a running track of a satellite, a plane closest to the running track of the satellite under the geocentric rotation coordinate system, and further configured to acquire, a circular arc track closest to the running track of the satellite in the circular arc track model, and send information of the circular arc track to the determining unit 63;

the determining unit 63 is configured to determine, according information of the circular arc track, an equivalent velocity of SAR imaging of the satellite.

Preferably, the acquiring unit is specifically configured to convert, in the geocentric rotation coordinate system, satellite position coordinates into coordinates under the geocentric rotation coordinate system and acquire the plane closest to the running track of the satellite, and the plane satisfies the following expression:

$$n_1 x + n_2 y + n_3 z = c ;$$

where $\vec{n} = [n_1, n_2, n_3]^T$ is a unit normal vector of the plane and c is a constant;

acquire the unit normal vector $\vec{n} = [n_1, n_2, n_3]^T$ and the constant c when a quadratic sum of distances from respective points on the running track of the satellite to the plane is minimum, so as to acquire the plane closest to the running track of the satellite.

Preferably, the acquiring unit is specifically configured to project a position vector of the satellite in the geocentric rotation coordinate system in the plane closest to the running track of the satellite to acquire a projection curve; in the circular arc track model, acquire a circular arc track close to the projection curve; the circular arc track satisfies the following expression:

$$x^2 + y^2 + ax + by + d = 0 ;$$

acquire related parameters of the circular arc track: a, b and d when a quadratic sum of distances from respective points on the projection curve to the circular arc track is minimum, so as to acquire the circular arc track closest to the projection curve.

Preferably, the determining unit 63 is configured to set related parameters; the related parameters include: a point target on an earth surface track, set as T; a point S, set as the middle point of the circular arc track; the circle center C of the circular arc track, set as the origin of a coordinate system; then the coordinates of the point target T satisfy the following expression:

$$\vec{T} = \left[ 0, R_c \cos \beta_e, R_c \sin \beta_e \right]^T ;$$

where $R_c$ is the distance from the origin of the coordinate system to the point target T; $\beta_e$ is $\angle SCT$;
when running for a period of azimuth time $\tau$, the coordinates of the position $S'$ of the satellite satisfy the following expression:

$$\vec{S}' = \left[ r \sin(\omega_s \tau), r \cos(\omega_s \tau), 0 \right]^T ;$$

where $\omega_s$ is the angular velocity of the satellite on the circular arc track; $r$ is the radius of the circular arc track;
then an instantaneous slant range satisfies the following expression:

$$R(\tau) = \left| \overrightarrow{S'T} \right|$$
$$= \sqrt{\left[ r \sin(\omega_s \tau) \right]^2 + \left[ r \cos(\omega_s \tau) - R_c \cos \beta_e \right]^2 + \left[ R_c \sin \beta_e \right]^2}$$
$$= \sqrt{r^2 - 2rR_c \cos(\omega_s \tau) \cos \beta_e + R_c^2} ;$$

according to a method of small angle approximation, the expression for the instantaneous slant range is simplified into the following expression:

$$R(\tau) = \sqrt{r^2 + R_c^2 - 2rR_c \cos \beta_e + rR_c (\omega_s \tau)^2 \cos \beta_e} = \sqrt{r_0^2 + v_r^2 \tau^2} ;$$

where $r_0$ is the shortest slant range, $v_r$ is the equivalent velocity which satisfies the following expression:

$$v_r = \sqrt{rR_c \omega_s^2 \cos \beta_e}\,.$$

It should be appreciated that functions of each processing unit in the an apparatus for determining an equivalent velocity according to an embodiment of the present disclosure may be understood with reference to related description of the method for determining an equivalent velocity. Each processing unit in the apparatus for determining an equivalent velocity of the embodiment of the present disclosure may be implemented by an analog circuit for implementing functions of the embodiments of the present disclosure, or may be also implemented by running software on an intelligent terminal for executing the functions of the embodiments according to the present disclosure,

In practical applications, the model establishing unit 61, the acquiring unit 62 and the determining unit 63 in the apparatus for determining an equivalent velocity may be implemented by a Central Processing Unit (CPU), a Digital Signal Processor (DSP) or a Field-Programmable Gate Array (FPGA).

Those of ordinary skill in the art would appreciated that, all or part of the steps of the foregoing method embodiments may be implemented by a program instructing relevant hardware. The foregoing program may be stored in a computer readable storage medium. When the program runs, the preceding steps included in the method embodiments are performed. The foregoing storage medium includes various media capable of storing program codes, including a mobile storage device, a Read-Only Memory (ROM), a Random Access Memory (RAM), a magnetic disk, or an optical disk etc.

Or when being implemented as a software function module and sold or used as an independent product, the integrated unit in the embodiments of the present disclosure may be also stored in a computer-readable storage medium. With this in mind, the essence of the technical solution of the embodiments of the present disclosure, or the part contributing to the prior art may be embodied in a form of a software product. The computer software product is stored in a storage medium, including several instructions enabling a computer device (which may be a personal computer, a server, or a network device etc.) to execute all or part of the method in each embodiment of the present disclosure. The storage medium includes various media capable of storing program codes, including a mobile storage device, an ROM, am RAM, a magnetic disk, or an optical disk etc.

**Claims**

1. A method for determining an equivalent velocity of a satellite for SAR imaging, **characterized in that** the method comprising:

   establishing a geocentric rotation coordinate system, and acquiring, according to a running track of a satellite, a plane closest to the running track of the satellite under the geocentric rotation coordinate system so that a quadratic sum of distances from respective points on the running track of the satellite to the plane is minimum (101);
   establishing a circular arc track model in the plane and acquiring a circular arc track closest to the running track of the satellite in the circular arc track model (102);
   determining (103), according to the information of the circular arc track, an equivalent velocity of SAR imaging of the satellite,
   wherein the step of determining (103), according to information of the circular arc track, an equivalent velocity of SAR imaging of the satellite comprises:

   setting related parameters, the related parameters include: a point target on an earth surface track, set as T; a point S, set as the middle point of the circular arc track; the circle center C of the circular arc track, set as the origin of a coordinate system; then the coordinates of the point target T satisfy the following expression:

$$\vec{T} = \left[ 0, R_c \cos \beta_e, R_c \sin \beta_e \right]^T;$$

   where $R_c$ is the distance from the origin of the coordinate system to the point target T; $\beta_e$ is $\angle SCT$;
   During the data acquisition time, the coordinates of the position $S'$ of the satellite satisfy the following expression:

$$\vec{S}' = \left[ r\sin(\omega_s \tau), r\cos(\omega_s \tau), 0 \right]^T ;$$

where $\omega_s$ is the angular velocity of the satellite on the circular arc track; $\tau$ is the azimuth time; $r$ is the radius of the circular arc track;

then an instantaneous slant range ($R(\tau)$) satisfies the following expression:

$$R(\tau) = \left| \overrightarrow{S'T} \right|$$
$$= \sqrt{\left[ r\sin(\omega_s \tau) \right]^2 + \left[ r\cos(\omega_s \tau) - R_c \cos\beta_e \right]^2 + \left[ R_c \sin\beta_e \right]^2}$$
$$= \sqrt{r^2 - 2rR_c \cos(\omega_s \tau)\cos\beta_e + R_c^2} ;$$

according to a method of small angle approximation, the expression for the instantaneous slant range ($R(\tau)$) is simplified into the following expression:

$$R(\tau) = \sqrt{r^2 + R_c^2 - 2rR_c \cos\beta_e + rR_c (\omega_s \tau)^2 \cos\beta_e} = \sqrt{r_0^2 + v_r^2 \tau^2} ;$$

where $r_0$ is the shortest slant range, $v_r$ is the equivalent velocity and $v_r$ satisfies the following expression:

$$v_r = \sqrt{rR_c \omega_s^2 \cos\beta_e} .$$

2. The method according to claim 1, wherein the step (101) of establishing the geocentric rotation coordinates system, and acquiring, according to the running track of the satellite, the plane closest to the running track of the satellite under the geocentric rotation coordinate system so that a quadratic sum of distances from respective points on the running track of the satellite to the plane is minimum comprises:

establishing the geocentric rotation coordinate system and converting satellite position coordinates into coordinates under the geocentric rotation coordinate system;
acquiring the plane closest to the running track of the satellite, and the plane satisfies the following expression:

$$n_1 x + n_2 y + n_3 z = c ;$$

where $\vec{n} = [n_1, n_2, n_3]^T$ is a unit normal vector of the plane and c is a constant;
acquiring the unit normal vector $\vec{n} = [n_1, n_2, n_3]^T$ and the constant c when a quadratic sum of distances from respective points on the running track of the satellite to the plane is minimum, so as to acquire the plane closest to the running track of the satellite.

3. The method according to claim 1, wherein the step (102) of establishing the circular arc track model in the plane and acquiring the circular arc track closest to the running track of the satellite in the circular arc track model comprises:

projecting a position vector of the satellite in the geocentric rotation coordinate system to the plane closest to the running track of the satellite to acquire a projection curve;
establishing the circular arc track model, and acquiring a circular arc track close to the projection curve in the circular arc track model, the circular arc track satisfies the following expression:

$$x^2 + y^2 + ax + by + d = 0 ;$$

acquiring related parameters of the circular arc track: a, b and d when a quadratic sum of distances from respective points on the projection curve to the circular arc track is minimum, so as to acquire the circular arc track closest to the projection curve.

4.   An apparatus for determining an equivalent velocity of a satellite for SAR imaging, wherein the apparatus comprises: a model establishing unit (61), an acquiring unit (62) and a determining unit (63), wherein
the model establishing unit (61) is configured to establish a geocentric rotation coordinate system, and further configured to establish a circular arc track model in the geocentric rotation coordinate system;
the acquiring unit (62) is configured to acquire, according to a running track of a satellite, a plane closest to the running track of the satellite under the geocentric rotation coordinate system so that a quadratic sum of distances from respective points on the running track of the satellite to the plane is minimum, and further configured to acquire a circular arc track closest to the running track of the satellite in the circular arc track model, and send information of the circular arc track to the determining unit;
the determining unit (63) is configured to determine, according information of the circular arc track, an equivalent velocity of SAR imaging of the satellite,
wherein the determining unit (63) is configured to set related parameters, wherein the related parameters include: a point target on an earth surface track, set as T; a point S, set as the middle point of the circular arc track; the circle center C of the circular arc track, set as the origin of a coordinate system; then the coordinates of the point target T satisfy the following expression:

$$\vec{T} = \left[ 0, R_c \cos \beta_e, R_c \sin \beta_e \right]^T ;$$

where $R_c$ is the distance from the origin of the coordinate system to the point target T; $\beta_e$ is $\angle SCT$;
when running for a period of azimuth time $\tau$, the coordinates of the position $S'$ of the satellite satisfy the following expression:

$$\vec{S}' = \left[ r \sin(\omega_s \tau), r \cos(\omega_s \tau), 0 \right]^T ;$$

where $\omega_s$ is the angular velocity of the satellite on the circular arc track; $r$ is the radius of the circular arc track;
then an instantaneous slant range ($R(\tau)$) satisfies the following expression:

$$R(\tau) = \left| \overrightarrow{S'T} \right|$$
$$= \sqrt{\left[ r \sin(\omega_s \tau) \right]^2 + \left[ r \cos(\omega_s \tau) - R_c \cos \beta_e \right]^2 + \left[ R_c \sin \beta_e \right]^2}$$
$$= \sqrt{r^2 - 2rR_c \cos(\omega_s \tau) \cos \beta_e + R_c^2} ;$$

according to a method of small angle approximation, the expression for the instantaneous slant range ($R(\tau)$) is simplified into the following expression:

$$R(\tau) = \sqrt{r^2 + R_c^2 - 2rR_c \cos \beta_e + rR_c (\omega_s \tau)^2 \cos \beta_e} = \sqrt{r_0^2 + v_r^2 \tau^2} ;$$

where $r_0$ is the shortest slant range, $v_r$ is the equivalent velocity which satisfies the following expression:

$$v_r = \sqrt{rR_c\omega_s^2\cos\beta_e}$$ .

5. The apparatus according to claim 4, wherein the acquiring unit (62) is configured to convert, in the geocentric rotation coordinate system, satellite position coordinates into coordinates under the geocentric rotation coordinate system and acquire the plane closest to the running track of the satellite, and the plane satisfies the following expression:

$$n_1 x + n_2 y + n_3 z = c$$ ;

where $\vec{n} = [n_1, n_2, n_3]^T$ is a unit normal vector of the plane and c is a constant;

acquire the unit normal vector $\vec{n} = [n_1, n_2, n_3]^T$ and the constant c when a quadratic sum of distances from respective points on the running track of the satellite to the plane is minimum, so as to acquire the plane closest to the running track of the satellite.

6. The apparatus according to claim 4, wherein the acquiring unit (62) is configured to project a position vector of the satellite in the geocentric rotation coordinate system in the plane closest to the running track of the satellite to acquire a projection curve; in the circular arc track model, acquire a circular arc track close to the projection curve; the circular arc track satisfies the following expression:

$$x^2 + y^2 + ax + by + d = 0$$ ;

acquire related parameters of the circular arc track: a, b and d when a quadratic sum of distances from respective points on the projection curve to the circular arc track is minimum, so as to acquire the circular arc track closest to the projection curve.

**Patentansprüche**

1. Verfahren zum Bestimmen einer äquivalenten Geschwindigkeit eines Satelliten für eine SAR-Abbildung, **dadurch gekennzeichnet, dass** das Verfahren umfasst:

Aufbauen eines geozentrischen Drehkoordinatensystems und gemäß einer laufenden Umlaufbahn eines Satelliten Erreichen einer Ebene, die unter dem geozentrischen Drehkoordinatensystem der laufenden Umlaufbahn des Satelliten am nächsten liegt, derart, dass eine quadratische Summe der Abstände von den jeweiligen Punkten auf der laufenden Umlaufbahn des Satelliten zu der Ebene ein Minimum ist (101);
Aufbauen eines Kreisbogenmodells der Umlaufbahn in der Ebene und Erreichen einer Kreisbogenumlaufbahn, die in dem Kreisbogenmodell (102) der Umlaufbahn der laufenden Umlaufbahn des Satelliten am nächsten liegt;
gemäß den Informationen der Kreisbogenumlaufbahn Bestimmen (103) einer äquivalenten Geschwindigkeit einer SAR-Abbildung des Satelliten,
wobei gemäß den Informationen der Kreisbogenumlaufbahn der Schritt des Bestimmens (103) einer äquivalenten Geschwindigkeit einer SAR-Abbildung des Satelliten umfasst:

Festsetzen der betreffenden Parameter, wobei die betreffenden Parameter enthalten: ein Punktziel auf einer Umlaufbahn auf der Erdoberfläche, das als T festgesetzt ist; einen Punkt S, der als der Mittelpunkt der Kreisbogenumlaufbahn definiert ist; den Kreismittelpunkt C der Kreisbogenumlaufbahn, der als der Ursprung eines Koordinatensystems festgesetzt wird; dann genügen die Koordinaten des Punktziels T dem Ausdruck der folgenden Gleichung:

$$\vec{T} = \left[0, R_c\cos\beta_e, R_c\sin\beta_e\right]^T$$ ;

wobei $R_c$ der Abstand von dem Ursprung des Koordinatensystems zu dem Punktziel T ist; $\beta_e$ ist < SCT;

während der Datenerfassungszeit genügen die Koordinaten der Position *S'* des Satelliten dem folgenden Ausdruck:

$$\vec{S'} = \left[\, r\sin(\omega_s\tau), r\cos(\omega_s\tau), 0\,\right]^T \; ;$$

wobei $\omega_S$ die Winkelgeschwindigkeit des Satelliten auf der Kreisbogenumlaufbahn ist; $\tau$ ist die Azimutzeit; $r$ ist der Radius der Kreisbogenumlaufbahn;

dann genügt eine augenblickliche Schrägentfernung ($R(\tau)$) bzw. eine Entfernung in radialer Ausrichtung (slant range) dem folgenden Ausdruck:

$$R(\tau) = \left|\vec{ST}\right|$$
$$= \sqrt{\left[r\sin(\omega_s\tau)\right]^2 + \left[r\cos(\omega_s\tau) - R_c\cos\beta_e\right]^2 + \left[R_c\sin\beta_e\right]^2}$$
$$= \sqrt{r^2 - 2rR_c\cos(\omega_s\tau)\cos\beta_e + R_c^2} \; ;$$

gemäß einem Verfahren einer kleinen Winkelapproximation wird der Ausdruck für die augenblickliche Schrägentfernung ($R(\tau)$) in den folgenden vereinfachten Ausdruck überführt:

$$R(\tau) = \sqrt{r^2 + R_c^2 - 2rR_c\cos\beta_e + rR_c\left(\omega_s\tau\right)^2\cos\beta_e} = \sqrt{r_0^2 + v_r^2\tau^2} \; ;$$

wobei $r_0$ die kürzeste Schrägentfernung ist, $v_r$ die äquivalente Geschwindigkeit ist und wobei $v_r$ dem folgenden Ausdruck genügt:

$$v_r = \sqrt{rR_c\omega_s^2\cos\beta_e} \; .$$

2. Verfahren nach Anspruch 1, wobei der Schritt (101) des Aufbauens des geozentrischen Drehkoordinatensystems und gemäß der laufenden Umlaufbahn des Satelliten des Erreichens der Ebene, die unter dem geozentrischen Drehkoordinatensystem der laufenden Umlaufbahn des Satelliten am nächsten liegt, derart, dass eine quadratische Summe der Abstände von den jeweiligen Punkten auf der laufenden Umlaufbahn des Satelliten zu der Ebene ein Minimum ist, umfasst:

Aufbauens des geozentrischen Drehkoordinatensystems und Umsetzen der Positionskoordinaten des Satelliten in Koordinaten unter dem geozentrischen Drehkoordinatensystem;
Erfassen der Ebene, die der laufenden Umlaufbahn des Satelliten am nächsten liegt, und wobei die Ebene dem folgenden Ausdruck genügt:

$$n_1x \;+\; n_2y \;+\; n_3z \;=\; c;$$

wobei $\vec{n}$ = $[n_1, n_2, n_3]^T$ ein Normaleneinheitsvektor der Ebene ist und c eine Konstante ist;
Erfassen des Normaleneinheitsvektors $\vec{n}$ = $[n_1, n_2, n_3]^T$ und der Konstante c, wenn eine quadratische Summe der Abstände von den jeweiligen Punkten auf der laufenden Umlaufbahn des Satelliten zu der Ebene ein Minimum ist, um so die Ebene zu erfassen, die der laufenden Umlaufbahn des Satelliten am nächsten liegt.

3. Verfahren nach Anspruch 1, wobei der Schritt (102) des Aufbauens des Kreisbogenmodells der Umlaufbahn in der Ebene und des Erreichens der Kreisbogenumlaufbahn, die in dem Kreisbogenmodell der Umlaufbahn der laufenden Umlaufbahn des Satelliten am nächsten liegt, umfasst:

Projizieren eines Positionsvektors des Satelliten in dem geozentrischen Drehkoordinatensystem auf die Ebene, die der laufenden Umlaufbahn des Satelliten am nächsten liegt, um eine Projektionskurve zu erfassen;
Aufbauen des Kreisbogenmodells der Umlaufbahn und Erfassen einer Kreisbogenumlaufbahn, die der Projektionskurve in dem Kreisbogenmodell der Umlaufbahn nahe kommt, wobei die Kreisbogenumlaufbahn dem folgenden Ausdruck genügt:

$$\mathtt{x}^2 + \mathtt{y}^2 + \mathtt{ax} + \mathtt{by} + \mathtt{d} = 0;$$

Erfassen der betreffenden Parameter der Kreisbogenumlaufbahn: a, b und d, wenn eine quadratische Summe von Abständen von den jeweiligen Punkten auf der Projektionskurve zu der Kreisbogenumlaufbahn ein Minimum ist, um so die Kreisbogenumlaufbahn zu erfassen, die der Projektionskurve am nächsten liegt.

4. Vorrichtung zum Bestimmen einer äquivalenten Geschwindigkeit eines Satelliten für eine SAR-Abbildung, wobei die Vorrichtung umfasst: eine Modellaufbaueinheit (61), eine Erfassungseinheit (62) und eine Bestimmungseinheit (63), wobei
die Modellaufbaueinheit (61) dafür konfiguriert ist, ein geozentrisches Drehkoordinatensystem aufzubauen, und ferner dafür konfiguriert ist, ein Kreisbogenmodell der Umlaufbahn in dem geozentrischen Drehkoordinatensystem aufzubauen;
die Erfassungseinheit (62) dafür konfiguriert ist, gemäß einer laufenden Umlaufbahn eines Satelliten eine Ebene zu erreichen, die unter dem geozentrischen Drehkoordinatensystem der laufenden Umlaufbahn des Satelliten am nächsten liegt, derart, dass eine quadratische Summe der Abstände von den jeweiligen Punkten auf der laufenden Umlaufbahn des Satelliten zu der Ebene ein Minimum ist, und ferner dafür konfiguriert ist, eine Kreisbogenumlaufbahn zu erfassen, die der laufenden Umlaufbahn des Satelliten in dem Kreisbogenmodell der Umlaufbahn am nächsten liegt, und um Informationen der Kreisbogenumlaufbahn an die Bestimmungseinheit zu senden;
die Bestimmungseinheit (63) konfiguriert ist, gemäß den Informationen der Kreisbogenumlaufbahn eine äquivalente Geschwindigkeit einer SAR-Abbildung des Satelliten zu bestimmen,
wobei die Bestimmungseinheit (63) konfiguriert ist, betreffende Parameter festzusetzen, wobei die betreffenden Parameter enthalten: ein Punktziel auf einer Umlaufbahn auf der Erdoberfläche, das als T festgesetzt ist; einen Punkt S, der als der Mittelpunkt der Kreisbogenumlaufbahn definiert ist; den Kreismittelpunkt C der Kreisbogenumlaufbahn, der als der Ursprung eines Koordinatensystems festgesetzt wird; dann genügen die Koordinaten des Punktziels T dem Ausdruck der folgenden Gleichung:

$$\vec{T} = \left[0, R_c \cos \beta_e, R_c \sin \beta_e\right]^T;$$

wobei $R_c$ der Abstand von dem Ursprung des Koordinatensystems zu dem Punktziel T ist; $\beta_e$ ist < SCT;
wenn eine Zeitperiode einer Azimutzeit $\tau$ durchlaufen wird, dann erfüllen die Koordinaten der Position S' des Satelliten den folgenden Ausdruck:

$$\vec{S}' = \left[r \sin(\omega_s \tau), r \cos(\omega_s \tau), 0\right]^T;$$

wobei $\omega_S$ die Winkelgeschwindigkeit des Satelliten auf der Kreisbogenumlaufbahn ist; $r$ ist der Radius der Kreisbogenumlaufbahn;
dann genügt eine augenblickliche Schrägentfernung ($R(\tau)$) bzw. eine Entfernung in radialer Ausrichtung (slant range) dem folgenden Ausdruck:

$$R(\tau) = \left| \overrightarrow{ST} \right|$$

$$= \sqrt{\left[ r \sin(\omega_s \tau) \right]^2 + \left[ r \cos(\omega_s \tau) - R_c \cos\beta_e \right]^2 + \left[ R_c \sin\beta_e \right]^2}$$

$$= \sqrt{r^2 - 2rR_c \cos(\omega_s \tau)\cos\beta_e + R_c^2} \quad ;$$

gemäß einem Verfahren einer kleinen Winkelapproximation wird der Ausdruck für die augenblickliche Schrägentfernung (*R(r)*) in den folgenden vereinfachten Ausdruck überführt:

$$R(\tau) = \sqrt{r^2 + R_c^2 - 2rR_c \cos\beta_e + rR_c (\omega_s \tau)^2 \cos\beta_e} = \sqrt{r_0^2 + v_r^2 \tau^2} \quad ;$$

wobei $r_0$ die kürzeste Schrägentfernung ist, $v_r$ die äquivalente Geschwindigkeit ist, die dem folgenden Ausdruck genügt:

$$v_r = \sqrt{rR_c \omega_s^2 \cos\beta_e} \quad .$$

**5.** Vorrichtung nach Anspruch 4, wobei die Erfassungseinheit (62) dafür konfiguriert ist, um in dem geozentrischen Drehkoordinatensystem Positionskoordinaten des Satelliten in Koordinaten unter dem geozentrischen Drehkoordinatensystem umzusetzen, und um die Ebene zu erfassen, die der laufenden Umlaufbahn des Satelliten am nächsten liegt, und wobei die Ebene dem folgenden Ausdruck genügt:

$$n_1 x + n_2 y + n_3 z = c;$$

wobei $\vec{n} = [n_1, n_2, n_3]^T$ ein Normaleneinheitsvektor der Ebene ist und c eine Konstante ist;

und wobei die Erfassungseinheit (62) dafür konfiguriert ist, den Normaleneinheitsvektors $\vec{n} = [n_1, n_2, n_3]^T$ und die Konstante c zu erfassen, wenn eine quadratische Summe der Abstände von den jeweiligen Punkten auf der laufenden Umlaufbahn des Satelliten zu der Ebene ein Minimum ist, um so die Ebene zu erfassen, die der laufenden Umlaufbahn des Satelliten am nächsten liegt.

**6.** Vorrichtung nach Anspruch 4, wobei die Erfassungseinheit (62) dafür konfiguriert ist, um in dem geozentrischen Drehkoordinatensystem einen Positionsvektor des Satelliten in die Ebene, die der laufenden Umlaufbahn des Satelliten am nächsten liegt, zu projizieren, um eine Projektionskurve zu erfassen; um in dem Kreisbogenmodell der Umlaufbahn eine Kreisbogenumlaufbahn zu erfassen, die der Projektionskurve nahe kommt; wobei die Kreisbogenumlaufbahn dem folgenden Ausdruck genügt:

$$x^2 + y^2 + ax + by + d = 0;$$

um die betreffenden Parameter der Kreisbogenumlaufbahn zu erfassen: a, b und d, wenn eine quadratische Summe von Abständen von den jeweiligen Punkten auf der Projektionskurve zu der Kreisbogenumlaufbahn ein Minimum ist, um so die Kreisbogenumlaufbahn zu erfassen, die der Projektionskurve am nächsten liegt.

**Revendications**

**1.** Procédé de détermination d'une vitesse équivalente d'un satellite à des fins d'imagerie SAR, **caractérisé en ce que** le procédé comprend de :

établir un système de coordonnées de rotation géocentrique, et acquérir, selon une trajectoire d'un satellite, un plan le plus proche de la trajectoire du satellite sous le système de coordonnées de rotation géocentrique, de sorte qu'une somme quadratique des distances à partir des points respectifs sur la trajectoire du satellite vers le plan soit minimale (101) ;

établir un modèle de trajectoire en arc circulaire dans le plan et acquérir une trajectoire en arc circulaire la plus proche de la trajectoire du satellite dans le modèle de trajectoire en arc circulaire (102) ;

déterminer (103), selon l'information de la trajectoire en arc circulaire, une vitesse équivalente d'imagerie SAR du satellite,

dans lequel l'étape de détermination (103), selon l'information de la trajectoire en arc circulaire, d'une vitesse équivalente d'imagerie SAR du satellite comprend de :

régler des paramètres relatifs, les paramètres relatifs incluant : un point cible sur une trajectoire de surface terrestre, réglé comme T ; un point S, comme le point central de la trajectoire en arc circulaire ; le centre de cercle C de la trajectoire en arc circulaire, réglé comme l'origine d'un système de coordonnées ; puis les coordonnées du point cible T satisfaisant à l'expression suivante :

$$\vec{T} = \left[0, R_c \cos\beta_e, R_c \sin\beta_e\right]^T$$ ;

où $R_c$ est la distance à partir de l'origine du système de coordonnées vers le point cible T ; $\beta_e$ est $\angle\textbf{\textit{SCT}}$ ;

pendant le temps d'acquisition de données, les coordonnées de la position S' satisfont à l'expression suivante :

$$\vec{S}' = \left[r \sin(\omega_s\tau), r \cos(\omega_s\tau), 0\right]^T$$ ;

où $\omega_s$ est la vitesse angulaire du satellite sur la trajectoire en arc circulaire; $\tau$ est le temps azimut ; r est le rayon de la trajectoire en arc circulaire ;

puis une distance oblique instantanée (R($\tau$)) satisfait à l'expression suivante :

$$R(\tau) = \left|\overline{S'T}\right|$$
$$= \sqrt{\left[r \sin(\omega_s\tau)\right]^2 + \left[r \cos(\omega_s\tau) - R_c \cos\beta_e\right]^2 + \left[R_c \sin\beta_e\right]^2}$$
$$= \sqrt{r^2 - 2rR_c \cos(\omega_s\tau)\cos\beta_e + R_c^2}$$ ;

selon un procédé d'approximation de petit angle, l'expression pour la distance oblique instantanée (R($\tau$)) est simplifiée en l'expression suivante :

$$R(\tau) = \sqrt{r^2 + R_c^2 - 2rR_c \cos\beta_e + rR_c \left(\omega_s\tau\right)^2 \cos\beta_e} = \sqrt{r_0^2 + v_r^2\tau^2}$$ ;

où $r_0$ est la distance oblique la plus courte, $v_r$ est la vitesse équivalente et $v_r$ satisfait à l'expression suivante :

$$v_r = \sqrt{rR_c \omega_s^2 \cos\beta_e}$$ .

2. Procédé selon la revendication 1, dans lequel l'étape (101) d'établissement du système de coordonnées de rotation géocentrique l'acquisition, selon la trajectoire du satellite, du plan le plus proche de la trajectoire du satellite sous le système de coordonnées de rotation géocentrique, de sorte qu'une somme quadratique des distances à partir des points respectifs sur la trajectoire du satellite vers le plan soit minimale, comprend de :

établir le système de coordonnées de rotation géocentrique et convertir les coordonnées de position de satellite en coordonnées sous le système de coordonnées de rotation géocentrique ;

acquérir le plan le plus proche de la trajectoire du satellite et le plan satisfait à l'expression suivante :

$$n_1 x + n_2 y + n_3 z = c \ ;$$

où $\vec{n} = [n_1, n_2, n_3]^T$ est un vecteur normal d'unité du plan et c est une constante ;

acquérir le vecteur normal d'unité $\vec{n} = [n_1, n_2, n_3]^T$ et la constante c quand une somme quadratique des distances à partir des points respectifs de la trajectoire du satellite vers le plan est minimale, de manière à acquérir le plan le plus proche de la trajectoire du satellite.

**3.** Procédé selon la revendication 1, dans lequel l'étape (102) d'établissement du modèle de trajectoire en arc circulaire dans le plan et d'acquisition de trajectoire en arc circulaire la plus proche de la trajectoire du satellite dans le modèle de trajectoire en arc circulaire comprend de :

projeter un vecteur de position du satellite dans le système de coordonnées de rotation géocentrique vers le plan le plus proche de la trajectoire du satellite afin d'acquérir une courbe de projection ;
établir le modèle de trajectoire en arc circulaire et acquérir une trajectoire en arc circulaire proche de la courbe de projection dans le modèle de trajectoire en arc circulaire, la trajectoire en arc circulaire satisfait à l'expression suivante :

$$x^2 + y^2 + ax + by + d = 0 \ ;$$

acquérir des paramètres relatifs de la trajectoire en arc circulaire : a, b et d quand une somme quadratique des distances à partir des points respectifs de la courbe de projection vers la trajectoire en arc circulaire est minimale, de manière à acquérir la trajectoire en arc circulaire la plus proche de la courbe de projection.

**4.** Dispositif de détermination d'une vitesse équivalente d'un satellite à des fins d'imagerie SAR, dans lequel le dispositif comprend : une unité d'établissement de modèle (61), une unité d'acquisition (62) et une unité de détermination (63), dans lequel
l'unité d'établissement de modèle (61) est configurée pour établir un système de coordonnées de rotation géocentrique et configurée en outre pour établir un modèle de trajectoire en arc circulaire dans le système de coordonnées de rotation géocentrique ;
l'unité d'acquisition (62) est configurée pour acquérir, selon une trajectoire d'un satellite, un plan le plus proche de la trajectoire du satellite sous le système de coordonnées de rotation géocentrique de sorte qu'une somme quadratique des distances à partir des points respectifs sur la trajectoire du satellite vers le plan soit minimale, et en outre configurée pour acquérir une trajectoire en arc circulaire la plus proche de la trajectoire du satellite dans le modèle de trajectoire en arc circulaire, et envoyer l'information de la trajectoire en arc circulaire à l'unité de détermination ;
l'unité de détermination (63) est configurée pour déterminer, selon l'information de la trajectoire en arc circulaire, une vitesse équivalente d'imagerie SAR du satellite ;
dans lequel l'unité de détermination (63) est configurée pour régler des paramètres relatifs, dans lequel les paramètres relatifs incluent : un point cible sur une trajectoire de surface terrestre, réglé comme T ; un point S, comme le point central de la trajectoire en arc circulaire ; le centre de cercle C de la trajectoire en arc circulaire, réglé comme l'origine d'un système de coordonnées ; puis les coordonnées du point cible T satisfaisant à l'expression suivante :

$$\vec{T} = \left[ 0, R_c \cos \beta_e, R_c \sin \beta_e \right]^T \ ;$$

où $R_c$ est la distance à partir de l'origine du système de coordonnées vers le point cible T ; $\beta_e$ est $\angle \mathbf{SCT}$ ;
pendant une période de temps azimut $\tau$, les coordonnées de la position S' du satellite satisfont à l'expression suivante :

$$\vec{S}' = \left[ r \sin(\omega_s \tau), r \cos(\omega_s \tau), 0 \right]^T \ ;$$

où $\omega_s$ est la vitesse angulaire du satellite sur la trajectoire en arc circulaire; r est le rayon de la trajectoire en arc circulaire ;

puis une distance oblique instantanée ($R(\tau)$) satisfait à l'expression suivante :

$$R(\tau) = \left| \overrightarrow{S'T} \right|$$
$$= \sqrt{\left[ r\sin\left(\omega_s\tau\right) \right]^2 + \left[ r\cos\left(\omega_s\tau\right) - R_c\cos\beta_e \right]^2 + \left[ R_c\sin\beta_e \right]^2}$$
$$= \sqrt{r^2 - 2rR_c\cos\left(\omega_s\tau\right)\cos\beta_e + R_c^2} \quad ;$$

selon un procédé d'approximation de petit angle, l'expression pour la distance oblique instantanée($R(\tau)$) est simplifiée en l'expression suivante :

$$R(\tau) = \sqrt{r^2 + R_c^2 - 2rR_c\cos\beta_e + rR_c\left(\omega_s\tau\right)^2\cos\beta_e} = \sqrt{r_0^2 + v_r^2\tau^2} \; ;$$

où $r_0$ est la distance oblique la plus courte, $v_r$ est la vitesse équivalente qui satisfait à l'expression suivante :

$$v_r = \sqrt{rR_c\omega_s^2\cos\beta_e} \; .$$

5. Dispositif selon la revendication 4, dans lequel l'unité d'acquisition (62) est configurée pour convertir, dans le système de coordonnées de rotation géocentrique, les coordonnées de position de satellite en coordonnées sous le système de coordonnées de rotation géocentrique et acquérir le plan le plus proche de la trajectoire du satellite et le plan satisfait à l'expression suivante :

$$n_1x + n_2y + n_3z = c \; ;$$

$\vec{n} = [n_1, n_2, n_3]^T$
où est un vecteur normal d'unité du plan et c est une constante ;
acquérir le vecteur normal d'unité $\vec{n} = [n_1, n_2, n_3]^T$ et la constante c quand une somme quadratique des distances à partir des points respectifs de la trajectoire du satellite vers le plan est minimale, de manière à acquérir le plan le plus proche de la trajectoire du satellite.

6. Dispositif selon la revendication 4, dans lequel l'unité d'acquisition (62) est configuré pour projeter un vecteur de position du satellite dans le système de coordonnées de rotation géocentrique dans le plan le plus proche de la trajectoire du satellite afin d'acquérir une courbe de projection ; dans le modèle de trajectoire en arc circulaire, acquérir une trajectoire en arc circulaire proche de la courbe de projection ; la trajectoire en arc circulaire satisfait à l'expression suivante :

$$x^2 + y^2 + ax + by + d = 0 \; ;$$

acquérir des paramètres relatifs de la trajectoire en arc circulaire : a, b et d quand une somme quadratique des distances à partir des points respectifs de la courbe de projection vers la trajectoire en arc circulaire est minimale, de manière à acquérir la trajectoire en arc circulaire la plus proche de la courbe de projection.

Fig. 1

| Establish a geocentric rotation coordinate system, and require, according to a running track of a satellite, a plane closest to the running track of the satellite under the geocentric rotation coordinate system | 101 |

| Establish a circular arc track model in the plane and require a circular arc track closest to the running track of the satellite in the circular arc track model | 102 |

| Determine, according information of the circular arc track, an equivalent velocity of SAR imaging of the satellite | 103 |

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREA MONTIGUARNIERI.** Adaptive removal of azimuth ambiguities in SAR images. *IEEE Transactions on Geoscience and Remote Sensing,* 01 March 2005, vol. 43 (3), 625-633

- **L. B. NERONSKIY et al.** Phase and amplitude histories model adapted to the spaceborne SAR survey - Advances in synthetic aperature radar. *IEE Proceedings: Radar, Sonar and Navigation,* 02 June 2003, vol. 150 (3), 184-192